Europäisches Patentamt

European Patent Office

Office européen des brevets

(11) Veröffentlichungsnummer: **0 100 457**
**A1**

# EUROPÄISCHE PATENTANMELDUNG

(21) Anmeldenummer: **83106640.2**

(22) Anmeldetag: **07.07.83**

(51) Int. Cl.³: **C 08 L 69/00**
**C 08 L 67/02**

(30) Priorität: **20.07.82 DE 3227029**

(43) Veröffentlichungstag der Anmeldung:
**15.02.84 Patentblatt 84/7**

(84) Benannte Vertragsstaaten:
**DE FR GB IT**

(71) Anmelder: **BAYER AG**
**Zentralbereich Patente, Marken und Lizenzen**
**D-5090 Leverkusen 1, Bayerwerk(DE)**

(72) Erfinder: **Weyer, Klaus, Dr.**
**Bayer Antwerpen N.V. Kanaldok B 1, Kruischans**
**B-3040 Antwerpen(BE)**

(72) Erfinder: **Bottenbruch, Ludwig, Dr.**
**Woehlerstrasse 5**
**D-4150 Krefeld(DE)**

(72) Erfinder: **Neuray, Dieter, Dr.**
**Mobay Chemical Corporation**
**New Martinsville West Virginia 26 155(US)**

(72) Erfinder: **Stix, Wolfgang, Dr.**
**Doerperhofstrasse 15**
**D-4150 Krefeld(DE)**

(54) Thermoplastische Formmassen aus Polycarbonat, Pfropfpolymerisat, Ethylen/Vinylacetat-Copolymerisat und ggf. Polyalkylenterephthalat.

(57) Durch Zusatz von Ethylen/Vinylacetat-Copolymerisat kann die kritische Breite von Formkörpern aus Polycarbonat, kautschukelastischem Pfropfpolymerisat und ggf. Polyalkylenterephthalt erhöht werden.

EP 0 100 457 A1

BAYER AKTIENGESELLSCHAFT     5090 Leverkusen, Bayerwerk

Zentralbereich

Patente, Marken und Lizenzen  Pv-Klu-c

Thermoplastische Formmassen aus Polycarbonat, Pfropfpolymerisat, Ethylen/Vinylacetat-Copolymerisat und ggf.
Polyalkylenterephthalat

Die Erfindung betrifft thermoplastische Formmassen aus
aromatischem Polycarbonat, kautschukelastischem Pfropfpolymerisat, Ethylen/Vinylacetat-Copolymerisat und ggf.
Polyalkylenterephthalat.

Formmassen aus aromatischem Polycarbonat und kautschukelastischem Pfropfpolymerisat sowie Formmassen aus Polycarbonat, Polyalkylenterephthalat und kautschukelastischem
Pfropfpolymerisat sind bekannt: DE-AS 11 70 141 (=US
31 30 177),  GB 992 503 (= US 31 62 695), DE-PS 15 69 448
(= GB 10 07 724), DE-AS 20 37 419 (= US 36 55 824), DE-OS
22 64 269 (= US 38 01 673), DE-OS 23 04 214 ( = GB
13 63 402), DE-OS 23 29 585, 30 31 524 (= US 42 60 693);
DE-PS 23 43 609 (= US 38 64 428), WO 80/00972 ( = US
42 57 937) und europäische Patentanmeldung 25 920
(= US 42 64 487). Sie sollen sich vor allem durch
hohe Schlagzähigkeit auszeichnen.

Le A 21 783 ' Ausland

Obwohl die genannten Formmassen viele positive Eigenschaften besitzen, erfüllen sie einige spezielle Anforderungen nicht. Insbesondere ist die Schlagzähigkeit von breiteren Prüfkörpern nicht ausreichend.

Die Abhängigkeit der Schlagzähigkeit von der Breite führt zu dem Begriff der "kritischen Breite", einem Werkstoffparameter, der als die Breite definiert wird, bei der in der graphischen Darstellung der Schlagzähigkeit in Abhängigkeit von der Probenbreite eine Unterbrechung auftritt. Beispielsweise zeigt Polycarbonat auf Basis von Bisphenol A mit einer Schmelzflußrate von 3 bis 6g/10 Min. bei 300°C (ASTM D-1238) eine Unterbrechung bei etwa 5,71 mm. Formteile aus diesem Material, die schmäler sind als 5,71 mm, reißen beim Aufschlag durch Verformungsbruch, während breitere Formteile durch Sprödbruch reißen.

Die Abhängigkeit der Schlagzähigkeit von der Breite stellt einen Nachteil dar, weil sie die Eignung der Formmassen dadurch zu begrenzen pflegt, daß sie der Dimensionierung und Formgestaltung von Formteilen Begrenzungen auferlegt.

Aufgabe der Erfindung war es nun, kautschukelastische Pfropfpolymerisate enthaltende Formmassen aus Polycarbonat und gegebenenfalls Polyalkylenterephthalat so zu modifizieren, daß die oben genannten Nachteile nicht auftreten.

Überraschenderweise wurde gefunden, daß der Zusatz relativ geringer Mengen eines Ethylen/Vinylacetat-Copolymerisats die "kritische Breite" der Formkörper erhöht.

Le A 21 783

Gegenstand der Erfindung sind thermoplastische Formmassen aus

A.    1-100 Gewichtsteilen aromatischem Polycarbonat und
B.    0-99 Gewichtsteilen Polyalkylenterephthalat,

wobei sich die Gewichtsteile der Komponenten A und B
auf 100 ergänzen, und

C.    1-30 Gew.-%, bezogen auf die Summe der Komponenten
      A und B, kautschukelastisches Pfropfpolymerisat,

dadurch gekennzeichnet, daß die Formmassen zusätzlich
D.    0.5-5, vorzugsweise 1-3.5, Gew.-%,
bezogen auf die Summe der Komponenten A und B, eines
Ethylen/Vinylacetat-Copolymerisats mit einem Gehalt an
copolymerisiertem Vinylacetat von 5-70, vorzugsweise
von 18-40 Gew.-%, bezogen auf Komponente D, enthalten.

Unter aromatischen Polycarbonaten A im Sinne dieser
Erfindung werden Homopolycarbonate, Copolycarbonate und
Mischungen dieser Polycarbonate verstanden, denen z.B.
mindestens eines der folgenden Diphenole zugrunde liegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,

Le A 21 783

Bis-(hydroxyphenyl)-sulfoxide,

Bis-(hydroxyphenyl)-sulfone,

α,α'-Bis-(hydroxyphenyl)-diisopropylbenzole

sowie deren kernalkylierte und kernhalogenierte Derivate. Diese und weitere geeignete Diphenole sind z.B. in den US-PS 3 028 365, 3 275 601, 3 148 172, 3 062 781, 2 991 273, 3 271 367, 2 999 835, 2 970 131 und 2 999 846, in den DE-OS 1 570 703, 2 063 050, 2 063 052, 2 211 956, 2 211 957, der FR-PS 1 561 518 und in der Monographie von H. Schnell, "Chemistry and Physics of Polycarbonates", Interscience Publishers, New York, 1964, beschrieben.

Bevorzugte Diphenole sind z.B.

4,4'-Dihydroxydiphenyl,

2,4-Bis-(4-hydroxyphenyl)-2-methylbutan,

α,α'-Bis-(4-hydroxyphenyl)-p-diisopropylbenzol,

2,2-Bis-(3-methyl-4-hydroxyphenyl)-propan und

2,2-Bis-(3-chlor-4-hydroxyphenyl)-propan.

Besonders bevorzugte Diphenole sind z.B.

2,2-Bis-(4-hydroxyphenyl)-propan,

2,2-Bis-(3,5-dichlor-4-hydroxyphenyl)-propan,

2,2-Bis-(3,5-dibrom-4-hydroxyphenyl)-propan,

1,1-Bis-(4-hydroxyphenyl)-cyclohexan und

2,2-Bis-(3.5-dimethyl-4-hydroxyphenyl)-propan.

Die aromatischen Polycarbonate A können durch den Einbau geringer Mengen, vorzugsweise von 0,05 bis 2,0 Mol-%

Le A 21 783

0100457

- 5 -

(bezogen auf eingesetzte Diphenole), drei- oder mehr als dreifunktioneller Verbindungen, beispielsweise solcher mit drei oder mehr als drei phenolischen Hydroxygruppen, verzweigt sein.

Die aromatischen Polycarbonate A sollen in der Regel mittlere Molekulargewichte $\bar{M}_w$ von 10 000 bis 200 000, vorzugsweise von 20 000 bis 80 000 haben, ermittelt durch Lichtstreuung.

Den hochmolekularen Polycarbonaten mit $\bar{M}_w$ von 10 000 bis 200 000 können auch kleine Anteile niedermolekularer Polycarbonate, z.B. mit einem mittleren Polykondensationsgrad von 2 bis 20, zugemischt sein.

Zur Einstellung des Molekulargewichts $\bar{M}_w$ der Polycarbonate A werden in bekannter Weise Kettenabbrecher, wie beispielsweise Phenol, Halogenphenole oder Alkylphenole, in den berechneten Mengen eingesetzt.

Polyalkylenterephthalate B im Sinne der Erfindung sind Reaktionsprodukte aus aromatischen Dicarbonsäuren oder ihren reaktionsfähigen Derivaten (z.B. Dimethylestern) und aliphatischen, cycloaliphatischen oder araliphatischen Diolen und Mischungen dieser Reaktionsprodukte.

Bevorzugte Polyalkylenterephthalate B lassen sich aus Terephthalsäure (oder ihren reaktionsfähigen Derivaten, z.B. Dimethylterephthalat) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München 1973).

Le A 21 783

- 6 -

Bevorzugte Polyalkylenterephthalate B enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate B können neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate B können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxyethoxyphenyl)-propan und 2,2-Bis-(4-hydroxypropoxyphenyl)-propan (DE-OS 24 07 674, 24 07 776, 27 15 932).

Le A 21 783

Die Polyalkylenterephthalate B können durch Einbau relativ kleiner Mengen 3- oder 4-wertiger Alkohole oder 3- oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate B, die allein aus Terephthalsäure oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate B sind auch Copolyester, die aus mindestens zwei der obengenannten Säurekomponenten und/oder aus mindestens zwei der obengenannten Alkoholkomponenten hergestellt sind; besonders bevorzugte Copolyester sind Poly-(ethylenglykol/butandiol-1,4)-terephthalate.

Die als Komponente B vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Le A 21 783

Die kautschukelastischen Polymerisate C umfassen Pfropfcopolymerisate - vorzugsweise mit Glasübergangstemperaturen unter -20°C, die im wesentlichen aus mindestens 2 der folgenden Monomeren erhältlich sind: Chloropren, Butadien, Isopren, Isobuten, Styrol, Acrylnitril, Ethylen, Propylen, Vinylacetat und (Meth-)Acrylsäureester mit 1 bis 18 C-Atomen in der Alkoholkomponente; also Propfpolymerisate, wie sie z.B. in "Methoden der Organischen Chemie", (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind. Bevorzugte Polymerisate C besitzen einen Gelgehalt von über 20, vorzugsweise über 40, Gew.-%.

Bevorzugte Polymerisate C sind z.B. mit Styrol und/oder Acrylnitril und/oder (Meth)-Acrylsäurealkylestern gepfropfte Polybutadiene, Butadien/Styrol-Copolymerisate und Poly-(meth)acrylsäureester, z.B. Copolymerisate aus Styrol oder Alkylstyrol und konjugierten Dienen (schlagfestes Polystyrol), d.h. Copolymerisate der in der DE-OS 16 94 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 23 48 377 (≙ US-PS 3 919 353) beschrieben sind.

Besonders bevorzugte Polymerisate C sind z.B. ABS-Polymerisate, wie sie z.B. in der DE-OS 20 35 390 (≙ US-PS 3 644 574) oder in der DE-OS 22 48 242 (≙ GB-PS

Le A 21 783

- 9 -

1 409 275) beschrieben sind.

Besonders bevorzugte Polymerisate C sind z.B. Pfropfpolymerisate, die durch Pfropfreaktion von

I.  10 bis 40, vorzugsweise 10 bis 35, insbesondere
    15 bis 25, Gew.-%, bezogen auf Pfropfprodukt,
    mindestens eines (Meth-)Acrylsäureesters und/
    oder eines Gemisches aus

    10 bis 35, vorzugsweise 20 bis 35, Gew.-%, bezogen auf Gemisch, Acrylnitril und
    65 bis 90, vorzugsweise 65 bis 80, Gew.-%, bezogen auf Gemisch, Styrol auf

II. 60 bis 90, vorzugsweise 65 bis 90, insbesondere
    75 bis 85, Gew.-%, bezogen auf Pfropfprodukt,
    eines Butadien-Polymerisats mit mindestens 70
    Gew.-%, bezogen auf II, Butadienresten als
    Pfropfgrundlage erhältlich ist,

wobei vorzugsweise der Gelanteil der Pfropfgrundlage
II $\geq$ 70 % (in Toluol gemessen), der Pfropfgrad G
0,15 bis 0,55 und der mittlere Teilchendurchmesser
$d_{50}$ des Pfropfpolymerisats C 0,2 bis 0,6, vorzugsweise 0,3 bis 0,5μm betragen.

(Meth-)Acrylsäureester I sind Ester der Acrylsäure bzw.
Methacrylsäure und einwertiger Alkohole mit 1 bis 8
C-Atomen.

Le A 21 783

Die Pfropfgrundlage II kann neben Butadienresten bis zu 30 Gew.-%, bezogen auf II, Reste anderer ethylenisch ungesättigter Monomerer, wie z.B. Styrol, Acrylnitril, Ester der Acryl- oder Methacrylsäure mit 1-4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten.

Der Pfropfgrad G bezeichnet das Gew.-Verhältnis von aufgepfropften Pfropfmonomeren zu Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (G. Kämpf, H. Schuster, Angew. Makromolekulare Chemie 14, (1970), 111-129) oder mittels Lichtstreuungsmessungen.

Besonders bevorzugte Polymerisate C sind z.B. auch Pfropfpolymerisate aus

a) 25 bis 98 Gew.-%, bezogen auf C, Acrylatkautschuk mit einer Glasübergangstemperatur unter -20°C als Pfropfgrundlage und

b) 2 bis 75 Gew.-%, bezogen auf C, mindestens eines polymerisierbaren ethylenisch ungesättigten Monomeren, dessen bzw. deren in Abwesenheit von (a) entstandenen Homo- bzw. Copolymerisate eine Glasübergangstemperatur über 25°C hätten, als Pfropfmonomere.

Die Acrylatkautschuke (a) der Polymerisate C sind vorzugsweise Polymerisate aus Acrylsäurealkylestern, gegebenenfalls mit bis zu 40 Gew.-% anderer polymerisierbarer ethylenisch ungesättigter Monomerer. Sofern die als Pfropfgrundlage (a) eingesetzten Acrylatkautschuke - wie auf Seite 13 beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1-C_8$-Alkylester, beispielsweise Methyl-, Ethyl-, Butyl-, Octyl- und 2-Ethylhexylester; Halogenalkylester, vorzugsweise Halogen-$C_1$-$C_8$-alkylester, wie Chlorethylacrylat, und aromatische Ester wie Benzylacrylat und Phenethylacrylat. Sie können einzeln oder in Mischung eingesetzt werden.

Le A 21 783

Die Acrylatkautschuke (a) können unvernetzt oder vernetzt, vorzugsweise partiell vernetzt, sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat und -isocyanurat, Tris-acryloyl-s-triazine; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydros-triazin, Triallylbenzole.

Die Menge der vernetzenden Monomeren beträgt vorzugsweise 0,02 bis 5, insbesondere 0,05 bis 2, Gew.-%, bezogen auf Pfropfgrundlage (a).

Le A 21 783

Bei cyclischen vernetzenden Monomeren mit mindestens 3 ethylenisch ungesättigten Gruppen ist es vorteilhaft, ihre Menge auf $<$ 1 Gew.-% der Pfropfgrundlage (a) zu beschränken.

Bevorzugte "andere" polymerisierbare ethylenisch ungesättigte Monomere, die neben den Acrylsäureestern gegebenenfalls zur Herstellung der Pfropfgrundlage (a) dienen können, sind z.B. Acrylnitril, Styrol, $\alpha$-Methylstyrol, Acrylamide, Vinyl-$C_1$-$C_6$-alkylether. Bevorzugte Acrylatkautschuke als Pfropfgrundlage (a) sind Emulsionspolymerisate, die einen Gelgehalt von $\geq$ 60 Gew.-% aufweisen.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Le A 21 783

Besonders bevorzugte Pfropfgrundlagen (a) für Pfropfpolymerisate C auf Basis von Polyacrylsäureestern seien
nachfolgend zusammengefaßt:

1.  Acrylsäureesterpolymerisate und -copolymerisate
    ohne Dienkautschukkern und

2.  Acrylsäureesterpolymerisate und -copolymerisate,
    die einen Dienkautschukkern enthalten.

Die Pfropfausbeute, d.h. der Quotient aus der Menge
des aufgepfropften Monomeren (b) und der Menge des
eingesetzten Pfropfmonomeren (b), beträgt in der Regel
20 bis 80 Gew.-%. Die Bestimmung kann, wie bei M. Hoffmann,
H. Krömer, R. Kuhn, Polymeranalytik, Bd. 1, Georg Thieme
Verlag, Stuttgart 1977, beschrieben, erfolgen.

Bevorzugte Pfropfmonomere (b) sind $\alpha$-Methylstyrol,
Styrol, Acrylnitril, Methylmethacrylat oder Mischungen
dieser Monomeren. Bevorzugte Pfropfmonomer-Mischungen
sind solche aus Styrol und Acrylnitril im Gew.-Verhältnis 90:10 bis 50:50.

Solche Pfropfpolymerisate C auf Basis von Polyacrylsäureestern werden z.B. in der DE-AS 24 44 584 ($\hat{=}$ US-PS
4 022 748) und in der DE-OS 27 26 256 ($\hat{=}$ US-PS 4 096 202)
beschrieben.

Besonders vorteilhafte Pfropfpolymerisate dieser Art
erhält man, wenn man 2 bis 20, vorzugsweise 2 bis 15,
Gew.-%, bezogen auf C, Monomer (b) auf 80 bis 98, vor-

Le A 21 783

zugsweise 85 bis 97, Gew.-%, bezogen auf C, des vollständig gebrochenen und in Wasser aufgeschlämmten Latex von (a) in Abwesenheit von Suspendiermittel aufpfropft. Das anfallende pulverförmige Pfropfpolymerisat kann anschließend getrocknet und im gewünschten Verhältnis unter Einwirkung von Scherkräften mit den anderen Komponenten so homogenisiert werden, daß die mittlere Teilchengröße $d_{50}$ von C in der erfindungsgemäßen Mischung 0,05 bis 3, vorzugsweise 0,1 bis 2, insbesondere 0,2 bis 1, µm beträgt.

Der Begriff "in Abwesenheit von Suspendiermittel" bedeutet die Abwesenheit von Stoffen, die nach Art und Menge die Pfropfmonomeren (b) in der wäßrigen Phase suspendieren könnten. Die Definition schließt die Anwesenheit von Stoffen nicht aus, die z.B. bei der Herstellung einer gepfropften Pfropfgrundlage (a) suspendierend gewirkt haben; in derartigen Fällen muß das Koagulations- oder Fällungsmittel, das zum Brechen des Latex (a) eingesetzt wird, in einer Menge zugesetzt werden, die die suspendierende Wirkung der in der Vorstufe eingesetzten Stoffe kompensiert; mit anderen Worten: es muß darauf geachtet werden, daß die Pfropfmonomeren (b) in der wäßrigen Phase keine (stabile) Emulsion ergeben.

Ein derart in Abwesenheit von Suspendiermittel hergestelltes Pfropfpolymerisat C ist als Bestandteil der erfindungsgemäßen Formmassen in den anderen Harzkomponenten zu einer außergewöhnlich niedrigen Teil-

Le A 21 783

chengröße verteilbar, die relativ unverändert auch längere Verarbeitungszeiten bei höherer Temperatur übersteht.

Der Begriff "außergewöhnlich niedrige Teilchengröße" meint, daß Anzahl, Form und Größe der einzusetzenden Pfropfpolymerisatteilchen mit Anzahl, Form und Größe der in die geschmolzenen anderen Harzkomponenten eingebrachten Pfropfpolymerisatteilchen auch nach dem Homogenisieren im wesentlichen noch übereinstimmen.

Als Pfropfgrundlage (a) können auch solche Acrylatkautschuke verwendet werden, die als wäßrige Emulsion (Latex) anfallen und deren Latexpartikel 1 bis 20 Gew.-%, vorzugsweise 1 bis 10 Gew.-%, bezogen auf (a), bereits in wäßriger Emulsion aufgepfropfte Monomere enthalten, deren Homo- bzw. Copolymerisate Glastemperaturen $> 0°C$ aufweisen würden.

Bevorzugte derartige aufgepfropfte Monomere sind Alkylacrylate, Alkylmethacrylate, Styrol, Acrylnitril, $\alpha$-Methylstyrol und/oder Vinylacetat.

Derartige Pfropfgrundlagen (a) werden z.B. durch Emulsionspolymerisation oder Emulsionspfropfpolymerisation hergestellt. Man kann sie aber auch so herstellen, daß man einen Acrylatkautschuk in Lösung oder Masse herstellt, dann die Pfropfmonomeren aufpfropft und anschließend diese Kautschuke in eine wäßrige Emulsion, die sich für weitere Pfropfverfahren eignet, überführt.

Le A 21 783

Als Pfropfgrundlagen (a) für Acrylatkautschuke dieser besonderen Ausführungsform eignen sich also vorzugsweise neben den auf Seite 13 aufgezählten Polymerisaten auch in wäßriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten polymerisierbaren Monomeren.

Bevorzugte Polymerisate D besitzen Schmelzindices von nicht fließfähig bis 1000, vorzugsweise von 0,1 bis 20, gemessen bei 190°C und 2,16 kp Belastung nach DIN 53 735. Sie können z.B. nach den in "Encyclopedia of Polymer Science and Technology", Bd. 15, 577-677 (1971) beschriebenen Methoden hergestellt werden.

Die erfindungsgemäßen Formmassen eignen sich hervorragend zur Herstellung von Scheinwerferreflektoren, Ventilatorpropellern, Zahnrädern etc.

Sie können bei Massetemperaturen von 260 bis 280°C und bei Formtemperaturen von 60 bis 70°C verspritzt werden.

Die erfindungsgemäßen Formmassen können übliche Additive, wie Gleit- und Entformungsmittel, Nukleiermittel, Stabilisatoren, Füll- und Verstärkungsstoffe, Flammschutzmittel sowie Farbstoffe enthalten.

Die Formmassen können bis zu 60 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Formmassen enthalten Flammschutzmittel in einer Konzentration von im allgemeinen weniger als 30 Gew.-%, bezogen auf die flammgeschützten Formmassen.

Es kommen alle bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem enthalten sie in der Regel einen Synergisten, wie z.B. Antimontrioxid.

Die in den nachfolgenden Beispielen angegebenen Teile sind Gewichtsteile; Prozentangaben beziehen sich auf das Gewicht.

Beispiel 1

40 Teile Polybutylenterephthalat mit einer Intrinsic-Viskosität von 1,19 dl/g (gemessen in Phenol/o-Dichlorbenzol (Gewichtsverhältnis 1:1) bei 25°C im Ubbelohde-Viskosimeter), 52 Teile Bisphenol-A-Polycarbonat mit einer relativen Viskosiät von 1,29 (gemessen in Dichlormethan bei einer Konzentration von 0,5 g/100 ml Dichlormethan bei 25°C), 5 Teile eines Propfpolymerisats bestehend aus 75 % Pfropfgrundlage aus vernetztem Polybutadien (Gelgehalt über 70 %, gemessen in Toluol) und 25 % Pfropfauflage aus 72 Teilen Styrol und 28 Teilen Acrylnitril,

Le A 21 783

2 Teile eines Ethylen/Vinylacetat (95 % : 5 %)-Copolymerisats und 1 Teil schwarzes Pigment wurden bei 270°C gemischt und granuliert.

Das Granulat wurde in einer Spritzgußmaschine bei 270°C Massetemperatur und 60°C Formtemperatur zu verschieden breiten Prüfstäben verarbeitet. An diesen Formkörpern wurde entsprechend ASTM D 256 die Kerbschlagprüfung durchgeführt und die Breite bestimmt, oberhalb der die Kerbschlagzähigkeit deutlich abfällt (kritische Breite).

Nach dieser Methode ergab sich bei der vorliegenden Mischung eine kritische Breite von > 8 mm bei Raumtemperatur.

Beispiel 2

Beispiel 1 wurde mit einem Ethylen/Vinylacetat (55 % : 45 %) Copolymerisat wiederholt. Die kritische Breite war > 8 mm bei Raumtemperatur.

Beispiel 3 (Vergleich)

Beispiel 1 wurde mit dem Unterschied wiederholt, daß man in Abwesenheit von Ethylen/Vinylacetat-Copolymerisat und ohne Pigmente arbeitete, aber anstelle von 52 Teilen 55 Teile Polycarbonat einsetzte. Die kritische Breite war 4,3 - 4,5 mm bei Raumtemperatur.

Le A 21 783

Patentansprüche

1. Thermoplastische Formmassen aus

A. 1-100 Gewichtsteilen aromatischem Polycarbonat und

B. 0-99 Gewichtsteilen Polyalkylenterephthalat, wobei sich die Gewichtsteile der Komponenten A und B auf 100 ergänzen, und

C. 1-30 Gew.-%, bezogen auf die Summe der Komponenten A und B, kautschukelastisches Pfropfpolymerisat,

dadurch gekennzeichnet, daß die Formmassen zusätzlich

D. 0.5 - 5 Gew.-%, bezogen auf die Summe der Komponenten A und B, eines Ethylen/Vinylacetat-Copolymerisats mit einem Gehalt an copolymerisiertem Vinylacetat von 5-70 Gew.-%, bezogen auf Komponente D, enthalten.

2. Formmassen nach Anspruch 1, dadurch gekennzeichnet, daß sie 1-3.5 Gew.-%, bezogen auf die Summe der Komponenten A und B, Copolymerisat D enthält.

3. Formmassen nach Ansprüchen 1 und 2, dadurch gekennzeichnet, daß das Copolymerisat D einen Gehalt an copolymerisiertem Vinylacetat von 18-40 Gew.-%, bezogen auf Komponente D, enthält.

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 340 350 (MOBAY)<br>* Ansprüche 1-10 * | 1-3 | C 08 L 69/00<br>C 08 L 67/02 |
| Y | FR-A-2 340 349 (MOBAY)<br>* Ansprüche 1-6 * | 1-3 | |
| D,Y | DE-A-1 569 448 (TEIJIN)<br>* Ansprüche 1-3 * | 1 | |
| D,Y | EP-A-0 025 920 (ROHM & HAAS)<br>* Ansprüche 1-11 * | 1 | |
| A | WO-A-8 000 153 (GENERAL ELECTRIC)<br>* Ansprüche 1-25 * | 1-3 | |

RECHERCHIERTE SACHGEBIETE (Int. Cl. ³)

C 08 L

Der vorliegende Recherchenbericht wurde für alle Patentansprüche erstellt.

| Recherchenort<br>DEN HAAG | Abschlußdatum der Recherche<br>28-10-1983 | Prüfer<br>DECOCKER L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82